# EUROPÄISCHE PATENTSCHRIFT

(11) **EP 1 614 929 B1**
(45) Veröffentlichungstag und Bekanntmachung des Hinweises auf die Patenterteilung: **23.08.2006**
(21) Anmeldenummer: 05013066.5
(22) Anmeldetag: 17.06.2005
(51) Int. Cl.: F16F 9/36

(54) **Dichtungs-und Führungspaket**
Seal and guide packing arrangement
Garniture d'étanhéité et de guidage

(30) Priorität: 09.07.2004 DE 102004033214
(43) Veröffentlichungstag der Anmeldung: 11.01.2006
(73) Patentinhaber: ThyssenKrupp Bilstein Suspension GmbH, 58256 Ennepetal (DE)
(72) Erfinder: Nevoigt, Andreas, Dr., 58135 Hagen (DE); Lang, Steffen, Dipl.-Ing., 97631 Bad Königshofen i. Gr. (DE)
(74) Vertreter: Adams, Steffen

(56) Entgegenhaltungen:
- EP-A- 1 353 085
- FR-A- 1 407 890
- US-A- 4 053 166

## Beschreibung

Die Erfindung betrifft ein Dichtungs- und Führungspaket für Stoßdämpfer. Mit derartigen Dichtungs- und Führungspaketen werden hydraulische Stoßdämpfer einerseits dichtend verschlossen, andererseits dienen diese Dichtungs- und Führungspakete dazu, die Kolbenstange bei ihrer oszillierenden Bewegung zu führen. Um eine Abdichtung des oberen Arbeitsraums des Stoßdämpfers zur Umgebung zu erreichen, liegt das Dichtungs- und Führungspaket einerseits dichtend an der Innenwand des Stoßdämpferrohres an, während es andererseits eine Dichtung umfasst, die dichtend an der Oberfläche der sich oszillierend bewegenden Kolbenstange anliegt.

Aus dem Stand der Technik sind zahlreiche konstruktive Ausführungsformen für derartige Dichtungs- und Führungspakete bekannt. So ist aus der DE 199 38 084 A1 beispielsweise ein Dichtungs- und Führungselement bekannt, welches eine über einen Teilbereich der Hubbewegung der Kolbenstange verschiebliche Führungshülse aufweist, die mit einem sich an einem Gehäuse oder einem Lagerkörper abstützenden Federelement verbunden ist. Das mit der Kolbenstange in Kontakt tretende Dichtungselement ist mit der Führungshülse gemeinsam beweglich angeordnet. Auf diese Weise sollen Reibungseinflüsse, die zwischen dem Dichtungselement und der Kolbenstange wirksam sind und die zu Beeinträchtigungen des Fahrkomforts führen, vermieden werden. Die Reibung zwischen dem Dichtungselement und der Kolbenstange kann deswegen zu Beeinträchtigungen des Fahrkomforts führen, weil beispielsweise eine gewünschte Einfederbewegung des Fahrzeugrades, insbesondere bei kleinen stoßartigen Belastungen, in Folge eines Haftens der Führungshülse bzw. des Dämpfungselementes auf der Kolbenstange vermieden oder verzögert werden (so genannter Stick-Slip-Effekt). Eine auf diese Weise vermiedene oder verzögerte Einfederbewegung des Fahrzeugrades hat eine Einleitung von insbesondere ungedämpften und/oder ungefederten Störkräften in den Fahrzeugträger zur Folge. Um diesen so genannten Stick-Slip-Effekt zu vermeiden und damit eine Verbesserung des Fahrkomforts zu erreichen, wird in der DE 199 38 084 A1 vorgeschlagen, sowohl das Dichtungselement als auch die Führungshülse beweglich anzuordnen. Diese Lösung ist vergleichsweise aufwändig, weil maßgebliche Bauteile des gesamten Dichtungs- und Führungspakets beweglich angeordnet sein müssen. Nachteilig ist weiterhin, dass mit der Beweglichkeit der Führungshülse unvermeidlich ein bewegungsbedingter Verschleiß verbunden ist.

Die FR-A-1 407 890 zeigt weiterhin ein Dichtungs- und Führungspaket mit den Merkmalen des Oberbegriffs des Anspruchs 1.

Der Erfindung liegt die Aufgabe zugrunde, ein Dichtungs- und Führungspaket für Stoßdämpfer zur Verfügung zu stellen, welches die negativen Auswirkungen des Stick-Slip-Effektes minimiert oder ganz vermeidet, sodass der Fahrkomfort verbessert wird.

Diese Aufgabe wird erfindungsgemäß mit einem Dichtungs- und Führungspaket mit den Merkmalen des Patentanspruchs 1 gelöst. Vorteilhafte Weiterbildungen sind in den Unteransprüchen 2 bis 5 angegeben.

Bei dem erfindungsgemäßen Dichtungs- und Führungspaket umschließt ein Elastomerelement die zylindrische Dichtung, die in dichtendem Kontakt mit der Kolbenstange steht. Das Elastomerelement ist dabei in einer besonders vorteilhaften Art und Weise ausgebildet, so dass die Dichtung in axialer Richtung optimal elastisch abgestützt wird. Für diese optimale elastische Abstützung sorgen die sich radial erstreckenden Lappen des Elastomerelements, die die Dichtung an deren Stirnflächen abstützen. Gleichzeitig weist das Elastomerelement einen weiteren kürzeren Lappen auf, der auf die Mantelfläche der zylindrischen Dichtung einwirkt und die Dichtung gegen die Kolbenstange vorspannt. Durch diese Vorspannung wird sichergestellt, dass die Dichtung stets dichtend an der Kolbenstangenoberfläche anliegt.

Die auf diese Weise erreichte elastische Lagerung der Dichtung hat zur Folge, dass bei kleinen Bewegungen der Kolbenstange, bei denen die Dichtung noch an der Kolbenstange haftet, sich das Elastomerelement aufgrund seiner elastischen Eigenschaften bewegt. Es entstehen dadurch keine Kraftspitzen mehr durch den so genannten Stick-Slip-Effekt. Werden die Bewegungen der Kolbenstange größer, so kann das Elastomerelement nicht mehr nachgeben und die Dichtung löst sich von der Kolbenstange. Auf diese Weise werden die durch Stick-Slip-Effekt entstehenden und für den Fahrkomfort nachteiligen Effekte wirksam minimiert bzw. im Idealfall ganz vermieden.

Um die Dichtung gegen Kippen und Verkanten zu schützen und diese in Position zu halten, werden zwischen den Stirnflächen der Dichtung und den diese abstützenden Lappen des Elastomerelements Stützscheiben angeordnet sind. Diese Stützscheiben können beispielsweise aus einem Stahlwerkstoff bestehen.

Die gemäß Patentanspruch 1 vorgesehenen Vorspannelemente können erfindungsgemäß auf unterschiedliche Art und Weise realisiert werden. Gemäß einer ersten Ausführungsform der Erfindung umfasst das Dichtungs- und Führungspaket einen im Wesentlichen zylindrischen Grundkörper, der eine Ausnehmung aufweist, in die das Elastomerelement einsetzbar ist. Die Ausnehmung in dem Grundkörper ist dabei im Verhältnis zu der radialen Position der Kolbenstange so dimensioniert, dass beim Einsetzen des Elastomerelements in den Grundkörper bzw. beim Einsetzen des Dichtungs- und Führungspakets in den Stoßdämpfer das Elastomerelement in radialer Richtung zusammengedrückt wird, sodass eine radiale Vorspannung der Dichtung gegen die Kolbenstange erfolgt. Die axiale Vorspannung des Elastomerelements wird bei dieser Ausführungsform der Erfindung durch einen Deckel erreicht, der auf den Grundkörper unter axialer Zusammendrückung des Elastomerelements aufmontiert wird. Dabei wird das Elastomerelement in axialer Richtung zusammengedrückt, sodass von dem Elastomerelement eine Vorspannung in axialer Richtung auf die Dichtung einwirkt.

In einer zweiten Ausführungsform der Erfindung sind Druckkanäle vorhanden, in denen sich im Betriebszustand ein unter Druck stehendes Fluid befindet. Durch diese Druckkanäle wird ein Druck auf die dem Dämpferinnenraum abgewandte Stirnfläche des Elastomerelements geleitet, welcher dem Druck aus dem kolbenstangenseitigen Arbeitsraum des Dämpfers entgegenwirkt. Auf diese Weise wird das Elastomerelement druckentlastet. Das unter Druck stehende Fluid, das beispielsweise die unter Druck stehende Dämpfungsflüssigkeit des Stoßdämpfers sein kann, wirkt entweder unmittelbar auf das Elastomerelement ein, oder die Einwirkung des Drucks auf das Elastomerelement wird unter Zwischenschaltung eines oder mehrerer weiterer Stützelemente mittelbar, d.h. indirekt auf das Elastomerelement übertragen. Dadurch wird der Innendruck des Dämpfers ausgeglichen, der das Elastomerelement mitsamt der Dichtung sonst nach oben drücken würde. Im Idealfall wird über die Druckkanäle eine vollständige Druckentlastung des Elastomerelements erreicht, sodass dieses unbelastet, d.h. ohne eine axiale Druckbelastung aufnehmen zu müssen, in dem Dichtungs- und Führungspaket sitzt. Die axiale und radiale Vorspannung des Elastomerelements wird bei der zweiten Ausführungsform auf die gleiche Weise erreicht wie bei der ersten Ausführungsform.

Bei der dritten Ausführungsform der Erfindung wird die Vorspannung des Elastomerelements ebenfalls entsprechend der ersten Ausführungsform der Erfindung erreicht, geordneten Druckkanal gebildet, d.h. die radiale und axiale Vorspannung des Elastomerelements erfolgt bei dieser dritten Ausführungsform der Erfindung analog zu der voranstehend beschriebenen ersten Ausführungsform der Erfindung. Im Unterschied zu der zweiten Ausführungsform ist bei der dritten Ausführungsform der Erfindung nur oberhalb des Elastomerelements (d.h. auf der dem Dämpferinnenraum abgewandten Seite) ein Druckkanal angeordnet, der mit einem unter Druck stehenden Gasraum verbunden ist, sodass in dem Druckkanal ein unter Druck stehendes Gas wirksam ist. Dieses unter Druck stehende Gas kann direkt oder indirekt auf das Elastomerelement einwirken. Dadurch wird dem Innendruck des Dämpfers, durch den die Dichtung bzw. das Elastomerelement mitsamt der Dichtung nach oben geschoben wird, entgegengewirkt werden, sodass der Dämpferdruck ausgeglichen und das Elastomerelement druckentlastet wird.

Besonders vorteilhaft ist die dritte Ausführungsform der Erfindung dann anzuwenden, wenn der Stoßdämpfer Bestandteil eines Luftfederbeins ist. In diesem Fall kann die Druckkammer der Luftfeder dazu genutzt werden, das unter Druck stehende Gas für die Druckentlastung bereitzustellen.

Im Folgenden wird die Erfindung anhand einer Zeichnung näher erläutert. Im Einzelnen zeigen
- Fig. 1:: einen Axialschnitt durch ein Dichtungs- und Führungspaket gemäß einer ersten Ausführungsform der Erfindung
- Fig. 2:: einen Axialschnitt durch ein Dichtungs- und Führungspaket gemäß einer zweiten Ausführungsform der Erfindung und
- Fig. 3:: einen Axialschnitt durch ein Dichtungs- und Führungspaket gemäß einer dritten Ausführungsform der Erfindung.

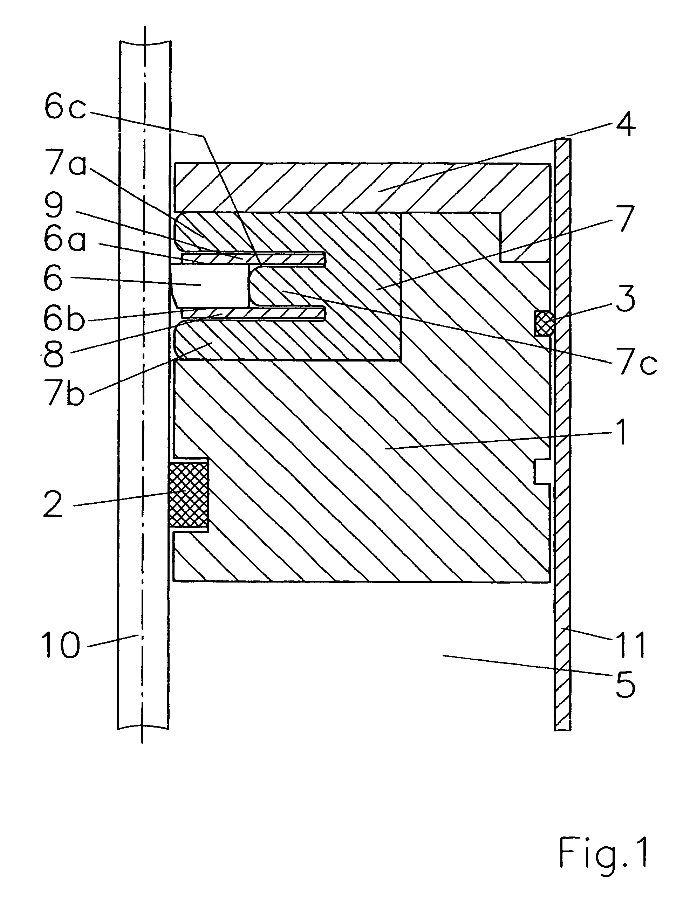

In Fig. 1 ist ein erfindungsgemäßes Dichtungs- und Führungspaket im axialen Halbschnitt gezeigt. Das Dichtungs- und Führungspaket umfasst einen Grundkörper 1, der an seinem oberen Ende im Bereich der Kolbenstange eine Ausnehmung aufweist, in die ein Elastomerelement 7 eingesetzt ist. Dieses Elastomerelement 7 umschließt eine Dichtung 6, die in Kontakt steht mit der Oberfläche der Kolbenstange 10. Das Elastomerelement 7 weist sich radial erstreckende Lappen 7a, 7b auf, welche die Stirnflächen 6a, 6b der Dichtung 6 überdecken, sodass die Dichtung 6 elastisch in axialer Richtung abgestützt wird. Zwischen der Dichtung 6 und den Lappen 7a und 7b des Elastomerelements 7 sind Stützscheiben 8, 9 angeordnet, sodass die Lappen 7a, 7b des Elastomerelements 7 nicht direkt in Kontakt mit der Dichtung stehen, sondern die elastische Abstützung der Dichtung indirekt unter Zwischenschaltung der Stützscheiben 8, 9 erfolgt. Bei geeigneter Gestaltung und Auslegung des Elastomerelements, z.B. hinsichtlich Form und /oder einer inhomogenen Dichteverteilung, können sie entfallen.

Zwischen den Lappen 7a, 7b des Elastomerelements 7 ist ein weiterer, sich in radialer Richtung erstreckender Lappen 7c ausgebildet, welcher sich in radialer Richtung gegen die Mantelfläche 6c der zylindrischen Dichtung 6 abstützt und die Dichtung 6 radial vorspannt. Nach dem Einsetzen des Elastomerelements 7 in die Ausnehmung des Grundkörpers 1 ragt das Elastomerelement 7 um ein gewisses Maß über die Oberkante des Grundkörpers 1 hinaus. Der über den Grundkörper hinausragende Teil des Elastomerelements 7 wird mittels eines Deckels 4 in axialer Richtung zusammengedrückt, wenn der Deckel 4 auf den Grundkörper 1 montiert wird. Dabei kommt es zu einer axialen Zusammendrückung des Elastomerelements 7, sodass eine axiale Vorspannung des Elastomerelements 7 erreicht wird. Durch diese axiale Vorspannung wird die Dichtung 6 in axialer Richtung durch die Lappen 7a und 7b elastisch abgestützt und fixiert gehalten.

Der Lappen 7c ist hinsichtlich seiner radialen Erstreckung so dimensioniert, dass er eine Kraft auf die Mantelfläche der zylindrischen Dichtung 6 ausübt, sodass diese im eingesetzten Zustand unter radialer Vorspannung gehalten wird. Auf diese Weise ist das Elastomerelement 7 sowohl in axialer als auch in radialer Richtung vorgespannt.

Die voranstehend beschriebene elastische Lagerung der Dichtung 6 bewirkt, dass bei kleinen Bewegungen der Kolbenstange, bei denen die Dichtung noch an der Kolbenstange haftet, sich das Elastomer bewegt, weil es zusammengedrückt wird.

Durch diese Zusammendrückung des Elastomers werden insbesondere kleine und stoßartige Bewegungen abgefedert. Es entstehen keine Kraftspitzen durch den so genannten Stick-Slip-Effekt. Werden dagegen die Bewegungen der Kolbenstange größer, so kann das Elastomerelement nicht mehr weiter nachgeben und die Dichtung löst sich von der Kolbenstange, ohne dass dies abrupt geschieht. Auf diese Weise werden plötzliche ruckartige Kraftspitzen, die durch einen ausgeprägten Stick-Slip-Effekt auftreten, wirksam vermieden.

Durch die Stützscheiben 8, 9 wird die Dichtung gegen ein Kippen und Verkanten geschützt und in ihrer vorgesehenen Position gehalten. Die Auslegung des Elastomerelements 7 mit den beiden äußeren längeren Lappen 7a, 7b unterstützt dabei die Stabilität der Dichtung. Der kurze Lappen 7c spannt die Dichtung 6 auf der Kolbenstange 10 vor und ersetzt, wenn die Möglichkeit zur Druckbeaufschlagung konstruktiv geschaffen wird, die beiden O-Ringe aus den aus dem Stand der Technik bekannten so genannten Stepseal-Dichtungen (vgl. Patent DE 198 36 286). Das Element 7c arbeitet dabei entsprechend den im vorgenannten Patent gezeigten O-Ringen, indem bei einer Druckbeaufschlagung durch eine elastische Verformung die Anpressung der Dichtung 6 auf die Kolbenstange 10 druckabhängig erhöht wird. Erreicht wird dies durch die geeignete Formgebung sowie die elastischen Eigenschaften und die Inkompressibilität des Elements 7c.

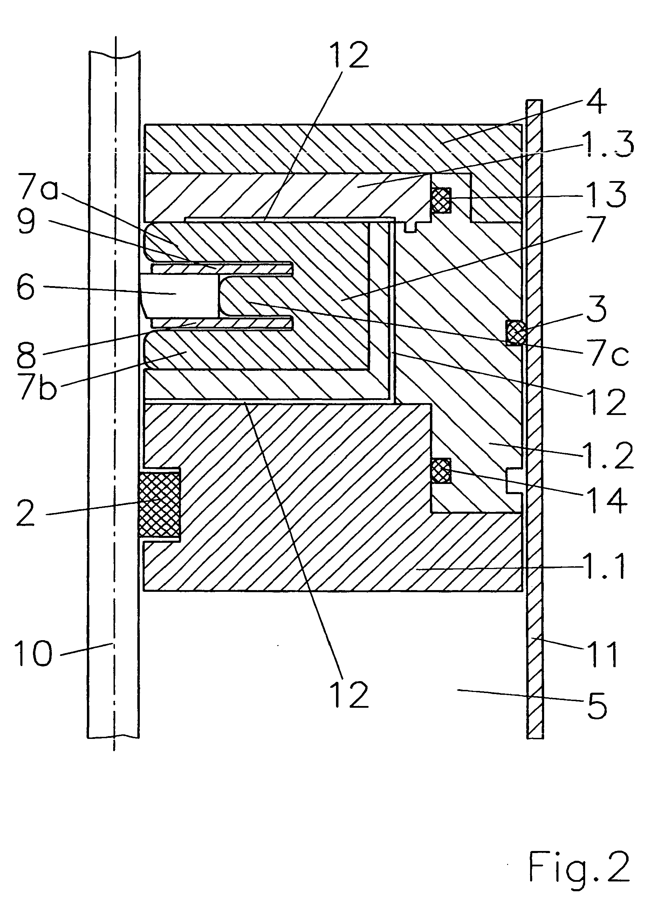

In Fig. 2 ist der Grundkörper des Dichtungs- und Führungspakets mehrteilig ausgebildet. Die Bauteile 1.1, 1.2 und 1.3 bilden den Grundkörper des Dichtungs- und Führungspakets. Durch O-Ring-Dichtungen 13, 14 sind die einzelnen Bauteile des mehrteiligen Grundkörpers gegeneinander abgedichtet. Die Abdichtung zwischen Grundkörper und Stoßdämpferrohr 11 erfolgt durch den O-Ring 3. In das Grundkörperbauteil 1.1 ist eine Nut eingebracht, in der ein Führungsband 2 zur Zentrierung der Kolbenstange angeordnet ist, das mit der Kolbenstange 10 in Kontakt steht. Dieses Führungsband besteht in bekannter Weise gewöhnlich aus dem Werkstoff PTFE, wobei das PTFE unterschiedliche Füllstoffe enthalten kann.

Außerdem dient das Führungsband der Aufnahme von auf die Kolbenstange einwirkenden Querkräften.

In den Grundkörperbauteilen 1.1 und 1.2 sind Druckkanäle 12 ausgebildet, durch die im Betriebszustand unter Druck stehende Dämpfungsflüssigkeit geführt wird. Diese unter Druck stehende Dämpfungsflüssigkeit übt auf das Elastomerelement 7 von oben Druck aus, der zu einer axialen Vorspannung des Elastomerelements 7 führt und den Innendruck des Dämpfers ausgleicht. Die Dichtung 6 wird somit nicht einseitig druckbeaufschlagt und läuft somit druckausgeglichen. Dabei müssen die druckbeaufschlagten Flächen entsprechend abgestimmt und ausgelegt werden. Die Bewegung des Elastomers ist so in beide Richtungen gewährleistet. Der obere horizontale Druckkanal 12 wird bei dieser Ausführungsform der Erfindung zwischen dem Bauteil 1.3 des Grundkörpers und dem Elastomerelement 7 ausgebildet.

Durch die Druckkanäle 12 wird ein Druckausgleich oberhalb des Elastomerelements erreicht. Dadurch wird ein besseres Ansprechverhalten gewährleistet. Der O-Ring 14 dichtet die Grundkörperbauteile 1.1 und 1.2 nach außen hin ab.

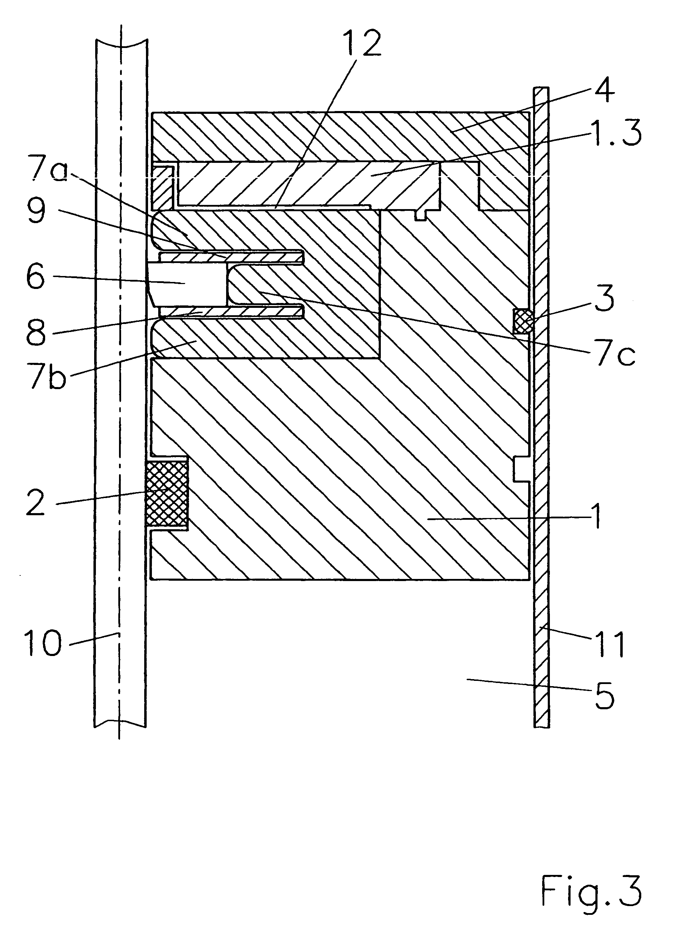

In Fig. 3 ist eine dritte Ausführungsform der Erfindung dargestellt. Bei dieser Ausführungsform der Erfindung ist der Grundkörper 1 des Dichtungs- und Führungspakets im Wesentlichen gleich aufgebaut wie bei der zu Fig. 1 erläuterten ersten Ausführungsform. Die radiale Vorspannung des Elastomerelements 7 erfolgt somit in der gleichen Weise wie voranstehend zu Fig. 1 ausgeführt. Im oberen Bereich des Dichtungs- und Führungspakets ist bei dieser dritten Ausführungsform der Erfindung ein Druckkanal 12 vorgesehen, der zwischen einem Bauteil 1.3, welches zum Grundkörper 1 dazugehört, und dem Elastomerelement 7 ausgebildet ist. Dieser Druckkanal 12 steht in Verbindung mit einem in Fig. 3 nicht dargestellten Gasdruckraum, der beispielsweise die Druckkammer einer Luftfeder sein kann. Das in diesem Gasdruckraum unter Druck stehende Gas wird somit auch in dem Druckkanal 12 geführt und wirkt unmittelbar in axialer Richtung auf das Elastomerelement 7 ein. Der hohe Außendruck sorgt für einen Ausgleich des Druckes, der von unten, d.h. vom Arbeitsraum her auf das Elastomerelement einwirkt. Dadurch kann die Dichtung druckausgeglichen betrieben werden und ihre Bewegung in beide axialen Richtungen ist gewährleistet.

Diese konstruktive Ausgestaltung des Dichtungs-und Führungspakets hat den Vorteil, dass auf konstruktiv einfache Weise die bei einem Luftfederbein vorhandene Druckkammer der Luftfeder ausgenutzt werden kann, um den Druckausgleich des Elastomerelements 7 zu bewirken.

### Bezugszeichenliste

- 1.: Grundkörper
- 1.1: Grundkörperbauteil
- 1.2: Grundkörperbauteil
- 1.3: Grundkörperbauteil
- 2.: Führungsband
- 3.: O-Ring
- 4.: Deckel
- 5.: Zugstufenarbeitsraum
- 6.: Dichtung
- 6a: Stirnfläche
- 6b: Stirnfläche
- 6c: Mantelfläche
- 7.: Elastomerelement
- 7a: Lappen
- 7b: Lappen
- 7c: Lappen
- 8.: Stützscheibe
- 9.: Stützscheibe
- 10.: Kolbenstange
- 11.: Stoßdämpferrohr
- 12.: Druckkanal
- 13.: O-Ring
- 14.: O-Ring

## Patentansprüche

1. Dichtungs- und Führungspaket für Stoßdämpfer, umfassend:
a) eine zylindrische, eine oszillierend bewegbare Kolbenstange (10) umschließende und mit dieser in Anlage stehende Dichtung (6), welche eine erste und eine zweite Stirnfläche (6a, 6b) und eine zylindrische Mantelfläche (6c) aufweist;
b) ein zylindrisches, die Dichtung (6) umschließendes Elastomerelement (7), welches zwei sich radial erstreckende Lappen (7a, 7b) aufweist, welche die Dichtung (6) elastisch an den Stirnflächen (6a, 6b) abstützen, und welches einen sich radial erstreckenden dritten Lappen (7c) aufweist, der die Dichtung gegen die Kolbenstangenoberfläche vorspannt; sowie
c) auf die Oberfläche des Elastomerelements (7) einwirkende Vorspannelemente (1; 1.1, 1.2, 1.3; 4), die das Elastomerelement (7) im Betriebszustand sowohl in axialer als auch in radialer Richtung unter Vorspannung halten, **dadurch gekennzeichnet,**
**dass** zwischen den Stirnflächen (6a, 6b) und den Lappen (7a, 7b) Stützscheiben (8, 9) angeordnet sind.

2. Dichtungs- und Führungspaket nach Anspruch 1, **dadurch gekennzeichnet, dass** die Vorspannelemente durch einen im Wesentlichen zylindrischen Grundkörper (1) und einen Deckel (4) gebildet sind, wobei der Grundkörper (1) eine Ausnehmung aufweist, in die das Elastomerelement (7) unter radialer Zusammendrückung desselben zur Erzeugung einer radialen Vorspannung eingesetzt ist, und wobei der Deckel (4) mit dem Grundkörper (1) derart verbunden ist, dass er das Elastomerelement (7) im Betriebszustand in axialer Richtung unter Vorspannung setzt.

3. Dichtungs- und Führungspaket nach Anspruch 1 oder 2, **dadurch gekennzeichnet, dass** Druckkanäle (12) zur Druckentlastung des Elastomerelements (7) vorhanden sind, die ein im Betriebszustand unter Druck stehendes Fluid führen, sodass das Fluid entweder direkt oder indirekt auf das Elastomerelement (7) einwirkt und eine Druckentlastung des Elastomerelements (7) gegen den Innendruck des Stoßdämpfers bewirkt.

4. Dichtungs- und Führungspaket nach Anspruch 3, **dadurch gekennzeichnet, dass** die Druckkanäle (12) als Hydraulikkanäle ausgebildet sind, welche die unter Druck stehende Dämpfungsflüssigkeit des Stoßdämpfers führen.

5. Dichtungs- und Führungspaket nach Anspruch 4, **dadurch gekennzeichnet, dass** die Druckkanäle (12) als Gasdruckkanäle ausgebildet sind und der Gasdruck einer Luftfeder für den Druckausgleich sorgt.

## Claims

1. Sealing and guiding assembly for shock absorbers, comprising:
a) a cylindrical seal (6) which surrounds a piston rod (10), which is movable in an oscillating manner, is in contact with this piston rod and comprises a first and second end surface (6a, 6b) and a cylindrical peripheral surface (6c);
b) a cylindrical elastomer element (7) surrounding the seal (6) and comprising two radially extending tabs (7a, 7b), which support the seal (6) on the end surfaces (6a, 6b) in a resilient manner, and a radially extending third tab (7c) which biases the seal against the piston rod surface; as well as
c) biasing elements (1; 1.1, 1.2, 1.3; 4) which act on the surface of the elastomer element (7) and keep the elastomer element (7) biased in the operational condition in both the axial and radial directions, **characterised in that** support discs (8, 9) are disposed between the end surfaces (6a, 6b) and the tabs (7a, 7b).

2. Sealing and guiding assembly as claimed in Claim 1, **characterised in that** the biasing elements are formed by a substantially cylindrical base body (1) and a cover (4), wherein the base body (1) comprises a recess into which the elastomer element (7) is inserted under radial compression of same to produce a radial bias, and wherein the cover (4) is connected to the base body (1) such that it biases the elastomer element (7) in the operational condition in the axial direction.

3. Sealing and guiding assembly as claimed in Claim 1 or 2, **characterised in that** pressure channels (12) are provided for relieving the pressure from the elastomer element (7) and carry a fluid pressurised in the operational condition so that the fluid acts on the elastomer element (7) either directly or indirectly and relieves the pressure from the elastomer element (7) with respect to the internal pressure of the shock absorber.

4. Sealing and guiding assembly as claimed in Claim 3, **characterised in that** the pressure channels (12) are formed as hydraulic channels which carry the pressurised damping fluid of the shock absorber.

5. Sealing and guiding assembly as claimed in Claim 4, **characterised in that** the pressure channels (12) are formed as gas pressure channels and the gas pressure of a pneumatic spring is used for pressure equalisation.

## Revendications

1. Garniture d'étanchéité et de guidage pour amortisseur, comprenant:
a) un organe d'étanchéité (6) cylindrique, entourant une tige de piston (10) mobile de manière oscillante, et en contact avec elle, qui présente une première et une seconde faces frontales (6a, 6b) et une surface périphérique (6c) cylindrique;
b) un élément (7) cylindrique, en élastomère, entourant l'organe d'étanchéité (6), qui présente deux lèvres radiales (7a, 7b) soutenant élastiquement l'organe d'étanchéité (6) à l'endroit de ses faces frontales (6a, 6b), et qui présente une troisième lèvre (7c) radiale qui repousse l'organe d'étanchéité contre la surface externe de la tige de piston; de même que
c) des éléments de précontrainte (1; 1.1; 1.2; 1.3; 4) agissant sur la surface externe de l'élément en élastomère (7), qui maintiennent en fonctionnement l'élément en élastomère (7) sous précontrainte aussi bien dans la direction axiale que dans la direction radiale,
**caractérisée en ce que**
des disques de support (8, 9) sont disposés entre les faces frontales (6a, 6b) et les lèvres (7a, 7b).

2. Garniture d'étanchéité et de guidage selon la revendication 1, **caractérisée en ce que** les éléments de précontrainte sont formés par une base (1) sensiblement cylindrique et un capuchon (4), la base (1) présentant un évidement dans lequel est logé l'élément en élastomère (7) sous une pression radiale pour produire une précontrainte radiale, et le capuchon (4) étant assemblé à la base (1) de telle sorte que l'élément en élastomère se trouve en fonctionnement (7) sous précontrainte en direction axiale.

3. Garniture d'étanchéité et de guidage selon la revendication 1 ou 2, **caractérisée en ce qu'**elle comprend des conduits de pression (12) pour décharger la pression de l'élément en élastomère (7), lesquels amènent, en fonctionnement, un fluide sous pression de telle sorte que le fluide agit directement ou indirectement sur l'élément en élastomère (7) et assure une décharge de la pression de l'élément en élastomère (7) par rapport à la pression interne de l'amortisseur.

4. Garniture d'étanchéité et de guidage selon la revendication 3, **caractérisée en ce que** les conduits de pression (12) sont réalisés sous la forme de canaux hydrauliques qui conduisent le fluide d'amortissement sous pression de l'amortisseur.

5. Garniture d'étanchéité et de guidage selon la revendication 4, **caractérisée en ce que** les conduits de pression (12) sont réalisés sous la forme de conduits de pression à gaz, et la pression du gaz réalise un ressort pneumatique pour l'équilibrage des pressions.
